# EUROPEAN PATENT APPLICATION

(11) **EP 2 418 578 A1**
(43) Date of publication of application: **15.02.2012**
(21) Application number: 09842292.6
(22) Date of filing: 25.03.2009
(51) Int. Cl.: G06F 9/46, G06F 9/50

(54) **A COMPUTER SYSTEM, RESOURCE MANAGEMENT SERVER OF A COMPUTER SYSTEM, AND RESOURCE MANAGEMENT METHOD OF A COMPUTER SYSTEM**

(71) Applicant: Hitachi, Ltd., Chiyoda-ku Tokyo 100-8280 (JP)
(72) Inventor: KOBAYASHI, Emiko, Tokyo 100-8220 (JP); SUGAUCHI, Kiminori, Tokyo 100-8220 (JP)
(74) Representative: Moore, Graeme Patrick
(86) International application number: PCT/JP2009/056905
(87) International publication number: WO 2010/109681

(57) **Abstract**

A computer system that achieves effective utilization of physical servers' resources in a virtual client system is provided.

In the virtual client system, the present invention obtains operation information about virtual machines, obtains access information indicating whether a user has logged on to the virtual machines or not, judges from connection information whether the user is using the virtual machines or not, calculates the capacity of the virtual machine(s) which are active, but is not accessed by the user, based on the capacity of resources used by the virtual machine(s), and then identifies the virtual machine(s) used by users from those not used by the users.

## Description

### TECHNICAL FIELD

The present invention relates to a computer system that includes a plurality of virtual machines, and in which the virtual machines execute processing requested by a user terminal and the user terminal is provided with screen information which is the results of the processing.

### BACKGROUND ART

A virtual client system by which an operation system and application programs that are running at a user's computer are executed in virtual machines for a server machine has been conventionally used. In order to realize the virtual client system, the server computer mounts the environment, in which hardware is emulated, on a host OS and has a guest OS for the virtual machines operate on virtual hardware.

In the virtual client system, the virtual machine performs information processing based on input information from a user terminal, transfers the virtual machine's screen output information, without any modification, to the user terminal, and the user terminal outputs the screen output information. Regarding the form of the virtual client system, the user accesses a virtual machine at a remote location via a network and can set the environment and applications for the virtual machine as they think proper. This type of system is known as a virtual desktop system.

In order to realize the virtual desktop environment for users, it is necessary to prepare virtual machines, corresponding to the number of users, on a plurality of physical servers. Since the number of virtual machines per server may be influenced by the resources for the physical servers and the resource usage per virtual machine, an administrator needs to know the usage of the resources when constructing the physical servers and allocating the virtual machines.

As a conventional example in which reference is made to the usage of physical servers' resources in order to optimally locate virtual machines in a plurality of servers, there is a virtual machine management apparatus disclosed in Japanese Patent No. 3861087.

Also, as a conventional example of a virtualization system for executing part of processing performed by a virtual machine, using the resource for another virtual machine, in which when managing the amount of resources used, the amount of resources used by the virtual machines is calculated not only with regard to each virtual machine, but also in consideration of dependence between the virtual machines, there is a virtualization system disclosed in Japanese Patent Application Laid-Open (Kokai) Publication No. 2008-217332.

Furthermore, in order to efficiently allocate computer resources to users in the environment where the number of the computer resources is less than the number of the users, Japanese Patent Application Laid-Open (Kokai) Publication No. 2007-188208 discloses a system that includes means for monitoring the usage of computer resources and means for registering conditions to judge whether releasing the resources is possible or not, according to the attributes of users and the attributes of the computer resources; and when a new allocation request is made in the state where all the computer resources have been allocated, the system identifies, releases, and allocates the computer resources which are not utilized, based on the usage and the conditions to judge whether releasing the resources is possible or not.

### [Related Art Documents]

### [Patent Documents]

[Patent Document 1] Japanese Patent No. 3861087
[Patent Document 2] Japanese Patent Application Laid-Open (Kokai) Publication No. 2008-217332
[Patent Document 3] Japanese Patent Application Laid-Open (Kokai) Publication No. 2007-188208

### DISCLOSURE OF THE INVENTION

In a virtual desktop environment where pluralities of virtual machines share a physical server's resources, some virtual machines may be active, but not coupled to users. This may result in consumption of the physical server's memory by the virtual machines not connected to the users, i.e., failure in effective utilization of the physical server's resources.

Conventional techniques aim at optimally allocating the virtual machines in the physical server based on the situation where the virtual machines are making use of the physical server's resources. However, since the virtual machines which are active, but not coupled to users are not identified, optimal utilization of the physical server's resources by the virtual machines fails in the virtual desktop system.

Thus, it is an object of the present invention to provide a computer system that realizes effective utilization of a physical server's resources in a virtual client system by providing information useful to have virtual machines optimally use the physical server's resources; a resource management server for the computer system; and a resource management method for the computer system.

In order to achieve the above-described object, the present invention is **characterized in that** in a virtual client system, the invention includes: means for obtaining operation information about virtual machines; means for obtaining access information indicating whether a user has logged onto the relevant virtual machine or not; means for judging from connection information whether the user is using the virtual machine or not; and means for calculating the capacity of the virtual machine(s) which is active, but not accessed by the user, based on the capacity of resources used by the virtual machine(s); and the virtual machine(s) used by the user(s) and those not used by the user(s) are identified, and this information is provided to the user..

### EFFECT OF THE INVENTION

According to the present invention, it is possible to provide: a computer system that realizes effective utilization of a physical server's resources in a virtual client system by providing information useful to have virtual machines optimally use the physical server's resources; a resource management server for the computer system; and a resource management method for the computer system.

### BRIEF DESCRIPTION OF THE DRAWINGS

Fig. 1 is a hardware block diagram illustrating an example of a computer system according to the present invention;
Fig. 2 is a block diagram illustrating the functional module configuration of a resource utilization management program for an asset management server;
Fig. 3 is a table showing an example of configuration information stored in the asset management server as information about virtual machines;
Fig. 4 is a resource utilization management table;
Fig. 5 is a flowchart illustrating a processing sequence executed by the asset management server to calculate, for example, unused capacity from the amount of resources used by each virtual machine in Fig. 4;
Fig. 6 is a memory utilization management table stored in the asset management server;
Fig. 7 shows an example of screen information output from the asset management server;
Fig. 8 is a table in which the asset management server registers information obtained from an agent program;
Fig. 9 is a flowchart illustrating a processing sequence executed by the management server to calculate the amount of resources used by virtual machines by referring to the table in Fig. 8;
Fig. 10 is a flowchart illustrating a processing sequence executed by the asset management server to calculate the amount of resources actually used by virtual machines in consideration of the state of connection between a user terminal and the virtual machines;
Fig. 11 is a flowchart illustrating a variation of processing executed by the asset management server;
Fig. 12 is a flowchart illustrating a processing sequence executed by the asset management server using the number of user processes;
Fig. 13 is a management table to which a user refers, and which presents, to the user, virtual machine(s) that have not been used for a certain period of time, as idle virtual machine(s); and
Fig. 14 is a block diagram of a computer system to have virtual machines optimally utilize the physical servers' resources.

### DESCRIPTION OF REFERENCE NUMERALS

- 101: desktop server
- 102: asset management server
- 103: desktop allocation server
- 104: user terminal
- 105: storage apparatus
- 106: remote access network
- 107: management network
- 115: virtual machine
- 116: virtualization mechanism
- 117: resource used amount management program
- 118: screen transfer program

### BEST MODE FOR CARRYING OUT THE INVENTION

The present invention will be explained below. Incidentally, information relating to the present invention will be explained below by using expressions such as "xxx table," "xxx list," "xxx DB," or "xxx queue." However, such information may be expressed with data structures other than tables, lists, DB, or queues. Therefore, the expression "xxx information" may be used instead of "xxx table," "xxx list," "xxx DB," or "xxx queue," in order to show that the information does not depend on the data structure.

In the following explanation, a "program" may sometimes be used as a subject of the relevant sentence. However, since a program is executed by a CPU (sometimes called a "processor") to perform specified processing using a memory and a communication port (network interface), an explanation may be given by using the "CPU" as a subject of the relevant sentence. Furthermore, the processing disclosed using the program as a subject of the relevant sentence may be considered as the processing executed by a computer such as a management server, or an information processing unit. Also, the whole or part of the program may be realized by dedicated hardware.

Furthermore, various programs may be installed in each computer by means of a program distribution server or storage media.

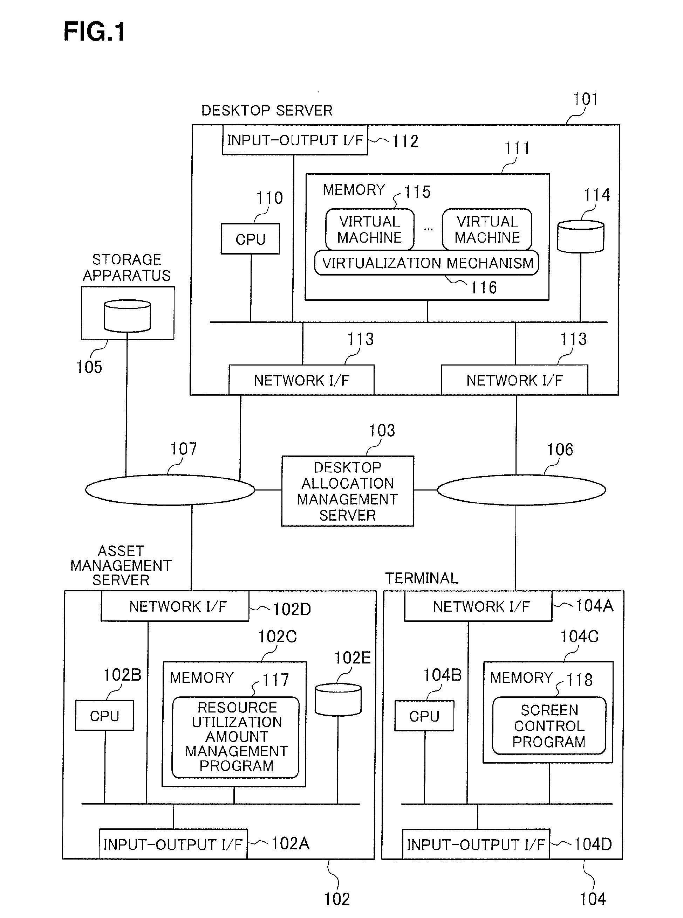

Fig. 1 is a hardware block diagram showing an example of a computer system according to the present invention. This computer system includes: a desktop server 101 for running one or more virtual machines; a storage apparatus 105 for storing desktop environment data for each user; a terminal 104 connected by a user at a remote location via a network to the virtual machines for the desktop server and operated by the user; a desktop allocation management server 103 for managing allocation of the virtual machines to users; and an asset management server 102 for managing the amount of the desktop server's resources used by the virtual machines. The resources mean hardware or software resources that execute control processing or storage processing; and the resources particularly indicate a memory for the desktop server. Incidentally, storage areas provided by the storage apparatus 105 can be managed as the resources. The "desktop environment data" means setting information relating to the desktop environment such as settings of wallpaper, icons, and a screen saver displayed on the desktop. The user can work in the same desktop environment by loading the same setting information, regardless of which virtual machine to use.

Reference numeral "106" represents a network for connecting the desktop server 101, the user terminal 104, and the desktop allocation management server 103. Reference numeral "107" represents a network for connecting the desktop server 101, the storage apparatus 105, and the asset management server.

The desktop server 101 includes: a main memory 111; a secondary memory unit such as hard disks; an processing unit (CPU) 110; a network interface 113 for communications with the user terminal 104, the desktop allocation management server 103, and the asset management server 102; and an input-output interface 112 for controlling input from a console terminal (a keyboard and a mouse) and output to an output device (display).

Reference numeral "116" represents a virtualization mechanism for scheduling the resources such as the CPU and the memory for the virtual machines. The virtualization mechanism is executed on a host OS of the desktop server and is composed of a virtual machine providing program (sometimes referred to as a "virtualization mechanism program"). A guest OS for the virtual machines 115 operates on the virtualization mechanism. The pluralities of virtual machines share the resources. Hardware (virtual machine providing processor) may be substituted for the whole or part of the virtual machine providing program.

The virtual machine providing program and the guest OS for the virtual machines 115 are loaded onto the memory 111. The CPU 110 realizes the virtual machines on the desktop server by executing these programs. Incidentally, the virtualization mechanism may operate directly on hardware, not on the host OS.

The virtual machines are allocated to individual users. A user data area is secured in the secondary memory unit 114 for the desktop server 101 or in the storage apparatus 105. The same applies to the OS and application programs used by users.

The asset management server 102 includes a CPU 102B, a memory 102C, a network interface 102D, an input-output interface 102A, and a secondary memory unit 102E. A resource used amount management program 117 is loaded onto the memory 102C, and the CPU 102B manages the amount of resources used by the virtual machines 115.

The user terminal 104 is a computer equipped with user interface devices, such as a keyboard and a mouse, and a display, and includes a CPU 104B, a memory 104C, a network interface 104A, and an input-output interface 105D.

Fig. 1 shows a thin client terminal having no secondary memory unit, but the user terminal 104 may be a terminal having a secondary memory unit. The CPU 104B executes a screen control program 118. The CPU 104B executes processing for receiving screen information from the virtual machines 115 and outputting it to the display and processing for sending information input to the mouse and the keyboard via the input interface to the virtual machines.

The configuration of the desktop allocation management server 103 is similar to that of the asset management server 102. The desktop allocation management server 103 executes an allocation management program for allocating the virtual machines for the desktop server to users. The allocation management program controls the desktop server 101 to allocate the virtual machines to users and activate the virtual machines.

In order to allocate the virtual machines to users, there are a fixed allocation method of allocating the same virtual machine to the same user and a dynamic allocation method of allocating any virtual machine, which is not used by other users, to a user every time the user needs to use a virtual machine. The desktop allocation management server 103 has management information about which virtual machine is allocated to which user.

A user first connects to the desktop allocation management server 103 and sends a request for use of the virtual desktop system to the desktop allocation management server 103. When the desktop allocation management server 103 accesses the desktop server 101, the CPU 110 for the desktop server 101 activates the virtual machine(s). As a response to the user terminal 104, the desktop allocation management server 103 notifies the user terminal 104 of an IP address which is information necessary for the user terminal to connect to the virtual machine. After receiving this response, the user terminal 104 connects to and uses the target virtual machine 115 for the desktop server.

Incidentally, one or more of or all the functions of the asset management server, the desktop allocation management server, and the desktop server may be performed by the same computer. For example, in some cases, a management server serves as a computer having the functions of the asset management server and the desktop allocation management server.

Examples of the input-output interface for the management server may include a display, a keyboard, and a pointer device, but may also include other devices. Instead of the input-output interface, a serial interface or Ethernet interface may be used as an input-output device, and that interface may be connected to a display computer having a display, a keyboard, or a pointer device; and the display computer may be substituted for the input-output device for input and display, by sending display information to the display computer and receiving input information from the display computer, thereby having the display computer display the information and accept input. Also, a terminal may be the display computer.

A set of one or more computers for managing the computer system and displaying display information according to the present invention may be hereinafter sometimes referred to as a "management system." If the management server displays display information, the management server is a management system. A combination of the management server and the display computer is also the management system. Furthermore, a plurality of computers may be used to realize processing equivalent to that of the management server in order to speed up the management processing and achieve the high reliability; and in this case, the plurality of computers (if the display computer is used to display information, the display computer should also be included) constitutes the management system.

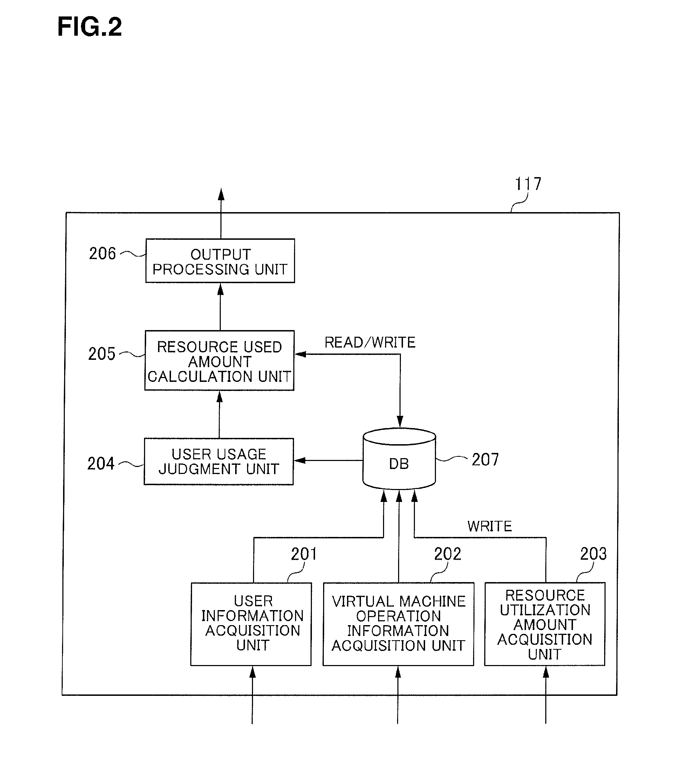

Fig. 2 is a block diagram showing the functional module configuration of the resource used amount management program 117 for the asset management server 102. This program includes: a virtual machine operation information acquisition unit 202 for obtaining identification information about the virtual machines which are active (or operating) on the desktop server 101; a user information acquisition unit 201 for obtaining information such as logs (logon and logoff) indicating that the user is using the virtual machines; a user usage judgment unit 204 for judging from the obtained user information whether the user is using the virtual machines or not; a resource utilization acquisition unit 203 for obtaining information about the resources used by the desktop server and the virtual machines, respectively; a resource utilization calculation unit 205 for calculating the capacity of the resources used in the total resource capacity, or the unused capacity which is the capacity of the resources not used; and an output processing unit 206 for displaying management information on the display. Whether the virtual machine is active or not is judged based on whether the guest OS is active or not.

The amount of memory used by the desktop server is a total amount of memory consumed by the entire software running on the desktop server, including the virtualization mechanism and the virtual machines. However, the amount of memory consumed by a specified part of programs may be excluded. An example of a part of programs is consumption areas for the kernel or the BIOS.

The amount of memory used by the virtual machines is a total amount of memory consumed by the respective virtual machines. However, a value obtained by subtracting a certain amount from the total amount of consumed memory may also be used. The amount of memory used by the virtual machines is, as the amount consumed by the virtual memories, for example, a total of the physical memory amount assigned as a memory space for the virtual machines and management information necessary to maintain the virtual machines, or only the physical memory amount assigned as a memory space. The pieces of information obtained by the user information acquisition unit 201, the virtual machine operation information acquisition unit 202, and the resource used amount acquisition unit 203 are arranged in tables described later and registered in a database 207. The user usage judgment unit 204 judges the users' usage of the virtual machines from the registered information in the database. The resource used amount calculation unit 205 calculates the amount of resources used based on the registered information in the database and registers the result of calculation in the database 207.

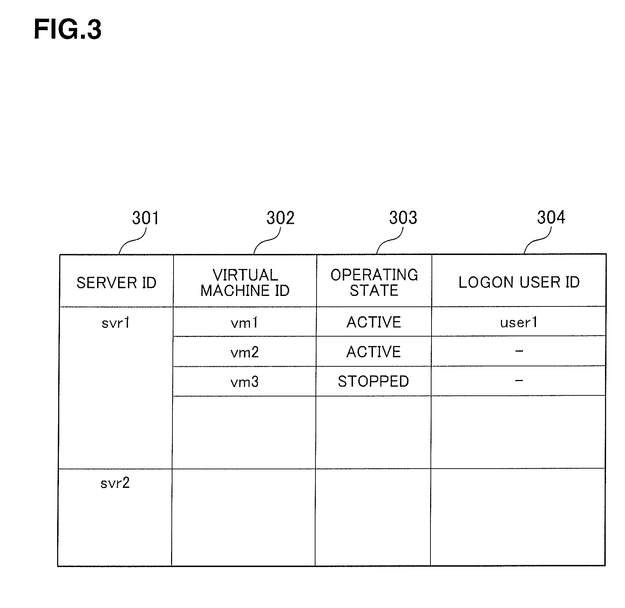

Fig. 3 is an example of configuration information stored in the asset management server as information about the virtual machines. This management information is stored in a table format in the memory 102C or the secondary memory unit 102E for the asset management server 102.

This configuration information about the virtual machines include: a server ID 301 for identifying a desktop server; a virtual machine ID 302 for identifying a virtual machine; and the operating state 303 of the relevant virtual machine; and a logon user ID 304 for identifying a user who has logged onto the relevant virtual machine at the time of acquisition of the configuration information. The server ID and the virtual machine ID are respectively unique as an ID. The operating state of the virtual machine is either "active" or "stopped," and "temporary halt" is included in the active state. The above information is obtained by the resource used amount management program 117 for the asset management server by regularly communicating with the virtualization mechanism 116 or the virtual machines 115.

The virtual machine operation information acquisition unit 202 regularly communicates with the virtualization mechanism program relating to the virtualization mechanism for the desktop server 101, thereby obtains the virtual machine IDs and the operating state of the virtual machines, and records them together with acquisition time in the configuration information table (Fig. 3). The user information acquisition unit 201 also communicates with the virtual machines 115, thereby obtains the user IDs and records them together with acquisition time in the configuration information table. If there is no use who has logged onto the virtual machine at the time of information acquisition, the relevant field in the table will be left blank.

In order for the asset management server 102 to obtain information about the virtual machines from the desktop server, there are a method of regularly outputting a request to the guest OS for the virtual machines and a method of locating an agent program in the virtual machines, so that the agent program obtains logon user information at regular time intervals and sends it to the asset management server. Furthermore, the agent program may keep a log for a certain period of time and send a set of logs to the asset management server.

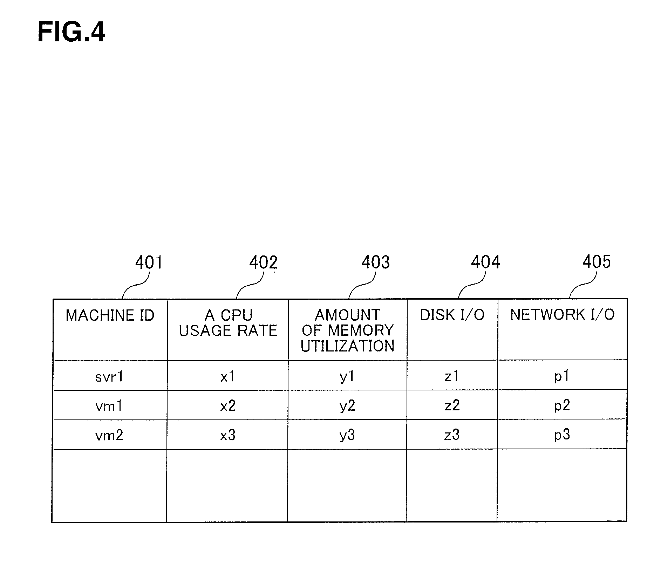

Fig. 4 is a management table of the amount of resources used (utilized). The asset management server 102 has this table. The resource used amount management table includes various pieces of information including: an ID 401 for identifying the desktop server or the virtual machine which uses (utilizes) the resources; a CPU usage rate 402 of the machine (desktop server or virtual machine) using the resources; the amount of memory used 403; a disk input-output amount (I/O) 404; and a network input-output amount (I/O) 405.

The ID "svr1" is an ID for a specific desktop server. It is shown that each pieces of information registered in svr1 are information about the entire server. Since the server is the desktop server in the system shown in Fig. 1, information about the entire server means information about a set of all the virtual machines. Incidentally, Fig. 1 shows a single desktop server, but there may be a plurality of desktop servers. In this case, the user terminal can connect to a specific virtual machine for a specific desktop server.

The resource used amount acquisition unit 203 (Fig. 2) obtains the information shown in Fig. 4 by communicating with the virtualization mechanism (virtualization mechanism program) 116 for the desktop server, and then registers the information shown in Fig. 4 together with acquisition time in the table.

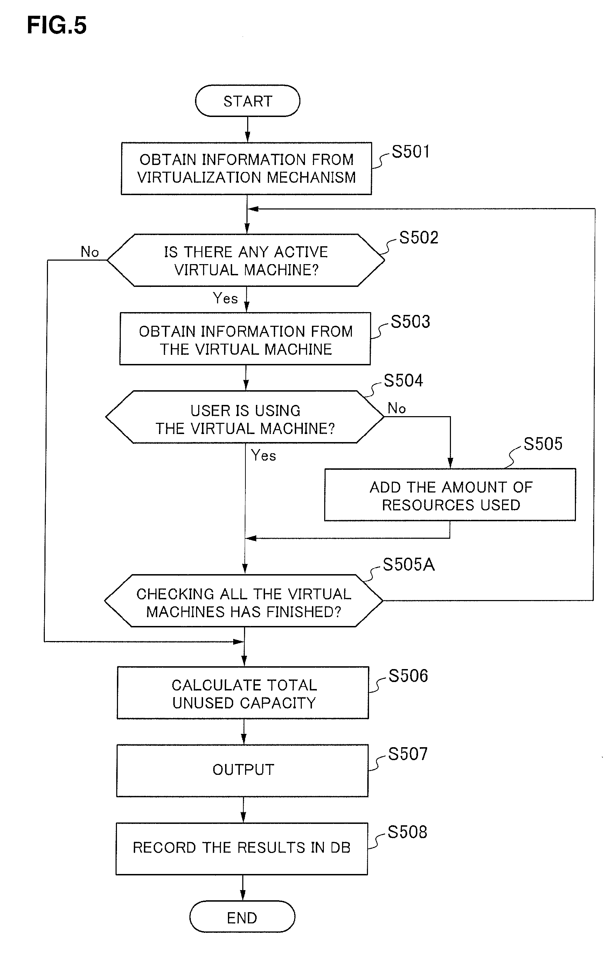

Fig. 5 is a flowchart for a processing sequence executed by the asset management server 102 to calculate, for example, the unused capacity based on the amount used by each virtual machine in Fig. 4. When the asset management server 102 receives a command from an administrator, or when the asset management server 102 regularly obtains the information from the desktop server, it executes this flowchart. The asset management server executes the flowchart for each desktop server. The command from the administrator can include the desktop server ID and a designated period of time.

Incidentally, Fig. 5 will be explained on the premise that the administrator's command has been sent to the asset management server. First, the asset management server 102 obtains information about the amount of memory used by the virtual machines from the virtualization mechanism 116 for the desktop server 101 and registers the amount of memory used regarding each virtual machine ID in the table shown in Fig. 4 (step S501).

Next, the asset management server 102 refers to the table in Fig. 3 and judges whether there is any virtual machine whose operating state is active or not (step S502), and then counts the number of the virtual machines which are active. Subsequently, the asset management server 102 obtains user information from the virtual machine(s) (step S503). If there is any user who has logged into the relevant virtual machine, the asset management server 102 determines that the relevant virtual machine is being used by the user (step S504). The asset management server 102 counts the number of the virtual machines used by the user.

The asset management server 102 determines the amount of memory occupied by the virtual machines which are active, but not used by the user (hereinafter referred to as the "ineffective virtual machine" meaning the virtual machine which is not effectively used), calculates a cumulative total amount of memory for all the ineffective virtual machines (step S505), and then stores the result of calculation as the "ineffective amount." After obtaining the information about all the active virtual machines, the asset management server 102 calculates the memory usage rate and the unused capacity in the following manner (steps S505A and S506). Whether the virtual machine is used or not is judged based on whether a user has logged into that virtual machine or not. If there is a user who has logged into the virtual machine, it means that the relevant virtual machine is being used.

The asset management server 102 subtracts the ineffective amount described above from the amount of memory used by the entire desktop server, which has been obtained from the virtualization mechanism program; and the asset management server 102 determines the result of calculation as the actual amount of memory occupied by the guest OS for the virtual machine(s) actually used by the user(s) and the host OS for realizing the virtualization mechanism. A percentage of the actual amount of memory to the total capacity of the physical memory is a usage rate of the memory.

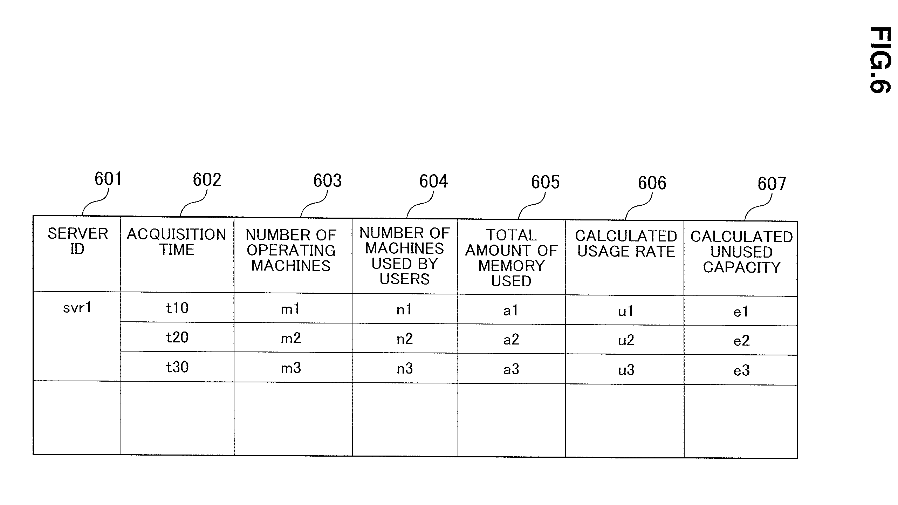

The result of subtraction of the actual amount of memory from the total capacity is considered as the total unused capacity (S506). The asset management server 102 then outputs the result of calculation on the screen of the display device (step S507). The asset management server 102 further registers the result of calculation in the database (207 in Fig. 2) in a table format shown in Fig. 6 (step S508). Since the memory capacity occupied by the ineffective virtual machines is categorized into the unused capacity, the asset management server 102 or the desktop server 101 can assign, or prompt the user or the administrator to assign, the resources occupied by the ineffective virtual machines to the virtual machines which are being used by the user.

In the table shown in Fig. 6, pieces of information are gathered for each desktop server ID 601; and the number of virtual machines which are active at the time of data acquisition 603, the number of virtual machines which are being used by users 604, the total amount of memory used 605 obtained from the virtualization mechanism, the calculated memory usage rate 606, and the calculated unused capacity 607 are registered for each data acquisition time 602.

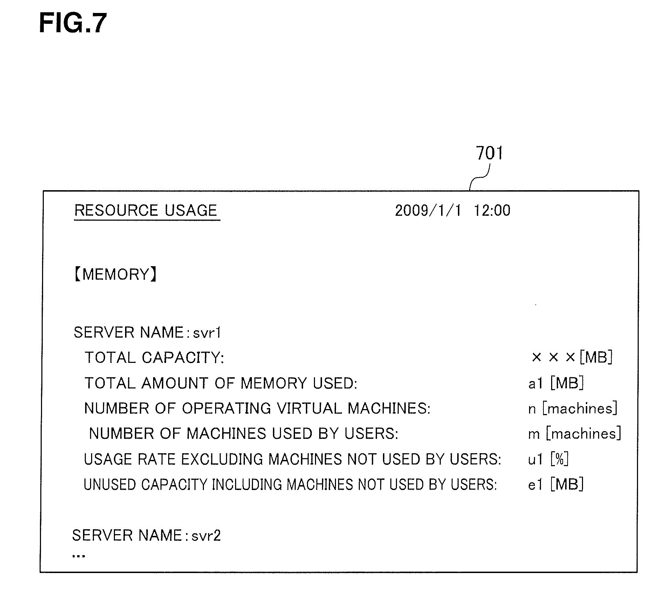

Fig. 7 shows an example of the screen output by the asset management server 102 in step S507 in Fig. 5. The physical memory capacity, the total amount of memory used, the number of active virtual machines, the number of virtual machines which are being used by users, the memory usage rate excluding the virtual machines not used by users, and the unused capacity including the virtual machines not used by users are displayed for each desktop server.

In order to output the history of these numerical values, changes in these property values may be displayed in a graph by setting the acquisition time to the horizontal axis and data values such as the number of machines used by users, the memory usage rate, or the unused capacity to the vertical axis. It is possible to display a long period of time such as one month or one year from the viewpoint of the administrator's recognition of the usage of the resource assets. In this case, an average value or a peak value of the property values may be determined and used on a daily or weekly basis. Since the asset management server treats the amount of memory occupied by the virtual machines which are not actually used by users, to be included in the unused capacity, the asset management server can provide the administrator with the actual situation of the amount of resources used in consideration of the usage of the virtual machines by users.

The above explanation has been given about the case where the resource used amount management program 117 accesses the virtual machines and obtains information from the virtual machines. Another example of a method for obtaining information from the virtual machines will be explained below.

An agent program is located in a virtual machine 115. The agent program obtains time when the power supply state of the virtual machine is changed (on/off), from the guest OS for the virtual machine. The agent program further obtains user logon time and logoff time from the guest OS according to a user logon and logoff script. The agent program sends these pieces of information to the asset management server regularly or when a request is made from the asset management server. Since the login user ID shown in Fig. 3 is not needed in this form, the asset management server does not record the login user ID in the table. The guest OS records a power supply state flag in the memory, and the agent program checks this flag.

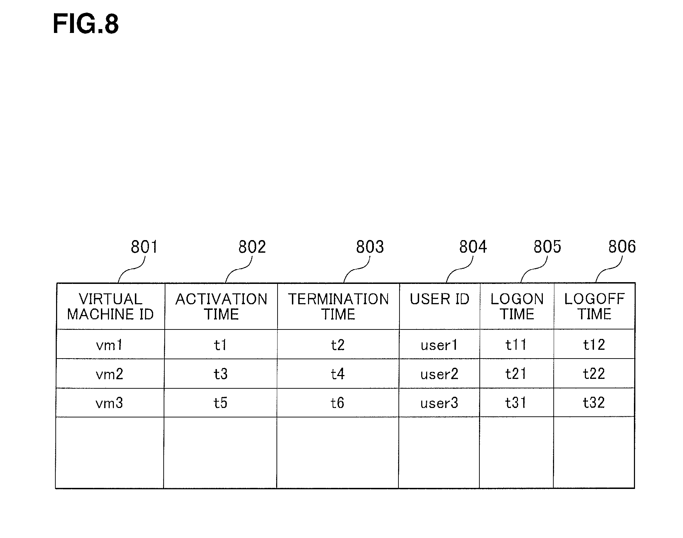

Fig. 8 shows a table in which the information obtained by the agent program from the asset management server is registered. This table is recorded in the database 207. This table includes, for each virtual machine ID 801, time when the relevant virtual machine was activated (power-on time) 802, time when the relevant virtual machine becomes no longer active (power-off time) 803, an ID of a user who logged into the virtual machine 804, and the user's login time 805, and logoff time 806.

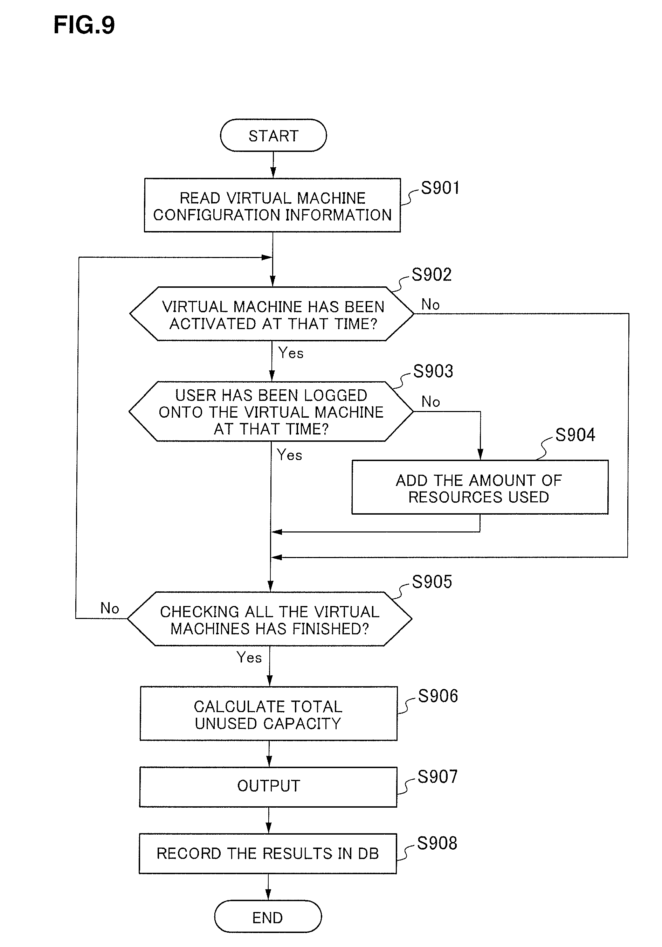

Fig. 9 shows a flowchart illustrating a processing sequence executed, on a regular basis or upon a request from the administrator, by the management server for calculating the amount of resources used by the virtual machines by referring to the table in Fig. 8. The asset management server performs this calculation by designating time (or a period of time).

The asset management server reads the configuration information about the virtual machines as shown in Figs. 3 and 4 (S901), and then obtain the virtual machine IDs (step S901). Next, the asset management server refers to the table in Fig. 8 based on the virtual machine ID and judges whether the relevant virtual machine was active at the time designated based on activation time and termination time of the virtual machine (step S902). If the virtual machine was active, the asset management server judges whether the user was logged onto the relevant virtual machine at the designated time, based on the user's logon time to and logoff time from the virtual machine (step S903). The asset management server determines the virtual machine to which the user was not logged on to be an ineffective virtual machine; and it also determines the amount of memory used by all the ineffective virtual machines (S904) to be an ineffective amount.

The asset management server repeats steps S902 to S904 until it obtains information about all the virtual machines (step S905). The following processing steps S906 to S908 are similar to those in Fig. 5.

Next, a variation of asset management will be explained in which although a user has logged onto a virtual machine, a connection (path) between the user terminal and the virtual machine is terminated. In this case, the asset management server determines that the relevant virtual machine is actually in the ineffective state; and then counts the resources occupied by this virtual machine as unused resources (surplus resources).

The asset management server adds a remote terminal address as information used to judge the state of path between the user terminal and the virtual machine, to the configuration information about the virtual machine as explained with reference to Fig. 3. The asset management server obtains the IP address of the remote terminal connected to the computer system from the guest OS for the virtual machine.

The asset management server obtains information about the user who has logged onto the virtual machine and, at the same time, checks a connection between the terminal and the virtual machine. If the connection is established, the asset management server writes the IP address for the terminal in the management table. In this way, the management server manages, at a specified point in time, whether the connection between the user terminal and the virtual machine is established or not. The agent program for the virtual machine uses a port number according to remote connection protocol for the purpose of this management.

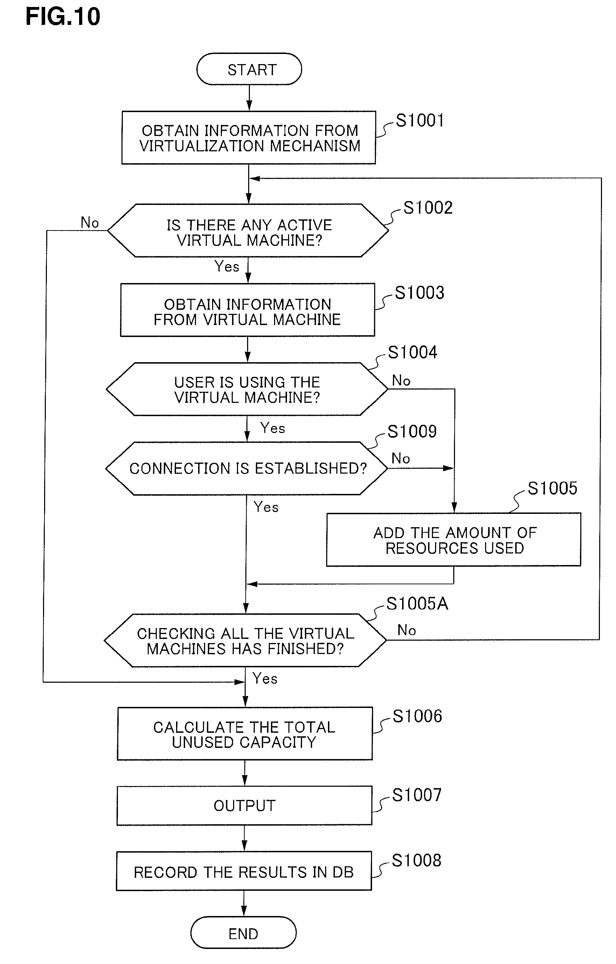

Fig. 10 is a flowchart illustrating a processing sequence executed by the asset management server for calculating the amount of resources actually used by virtual machines in consideration of the state of connection between the user terminal and the virtual machines. The difference between this flowchart and the flowchart explained with reference to Fig. 5 is that when obtaining information from the virtual machine (step S1003), the asset management server obtains, in addition to the user logon information, information about a connection between the relevant virtual machine and the user terminal which accesses the virtual machine from a remote location, and that even if the user has logged onto the virtual machine, the processing sequence includes a step of judging whether the virtual machine is disconnected from the user terminal or not (S1009).

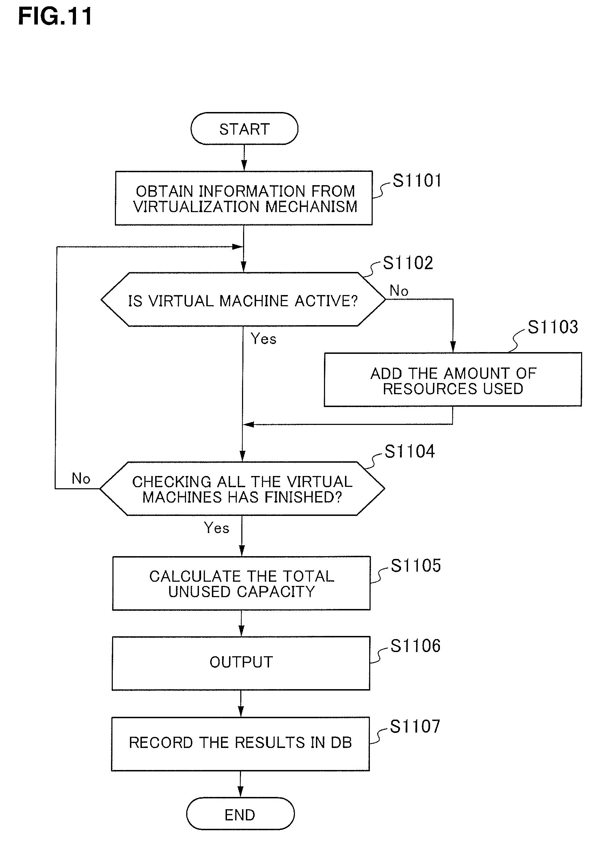

As another variation, a method for judging whether the user is using a virtual machine or not, based on the operating state of the virtual machine will be explained below. The asset management server categorizes the operating state of a virtual machine into "active," "stopped," "temporary halt" according to changes in the power supply state of the virtual machine and records the operating state in the configuration information in Fig. 3. Fig. 11 is a flowchart illustrating a processing sequence executed by the asset management server for performing this method. The difference between this flowchart and the flowchart in Fig. 5 is that even if the state of the relevant virtual machine is active (step S1102), if the virtual machine is in a temporary halt state, the amount of resources allocated to this virtual machine is considered as the unused amount, regardless of whether the user has logged onto this virtual machine or not (step S1103).

There are three types of the power supply state of the virtual machine: "active," "stopped," and "temporary halt." The "active" power supply state is categorized into the active state, the "stopped" power supply state is categorized into the stopped state, and the "temporary halt" power supply state is categorized into the active state. The agent program obtains a change event of the power supply state including temporary halt of the virtual machine.

Since the temporary halt is not particularly recorded as a type of the state in Fig. 3, it is categorized into the active state and the user logon information is further used as a condition for judgment. However, in the embodiment shown in Fig. 11, the asset management server recognizes the temporary halt state of the virtual machine and, therefore, determines that the resources in the temporary halt state are unused resources. This means that even if the user has logged onto the virtual machine, if the virtual machine is temporarily halted, it will be actually categorized and determined that the user is not using the virtual machine. When this judgment is made, the information about whether the virtual machine is logged on or not is not used.

As another variation, a method for having the asset management server judge whether the user is using a virtual machine or not, based on the number of user processes on the relevant virtual machine will be explained below. The asset management server adds the number of user processes to the configuration information explained with reference to Fig. 3. The asset management server obtains the number of user processes from the guest OS for the virtual machine. The asset management server obtains the number of user processes when obtaining the information about the user who has logged onto the virtual machine, from the virtual machine. The user process means a process activated by the user on the virtual machine. The user terminal is used as input-output means for the virtual machine.

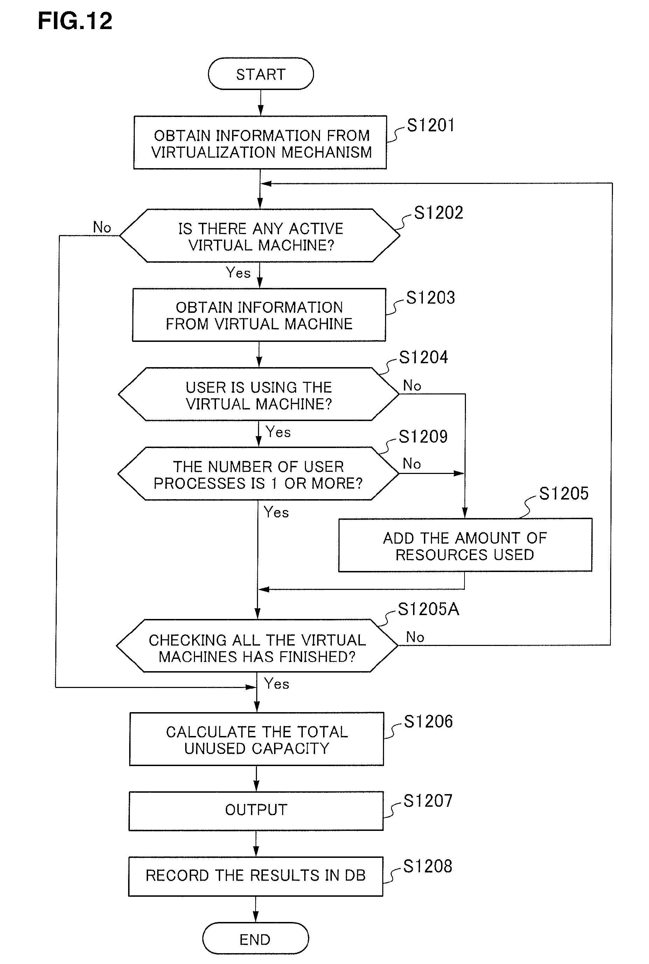

Fig. 12 is a flowchart illustrating a processing sequence executed by the asset management server using the number of user processes. The difference between this flowchart and the flowchart in Fig. 5 is that the asset management server obtains the number of user processes, and that even if the user has logged onto the relevant virtual machine, if the number of user process is less than a specified value (step S1209), for example, if no user process has been executed, the asset management determines the relevant virtual machine to be an ineffective virtual machine.

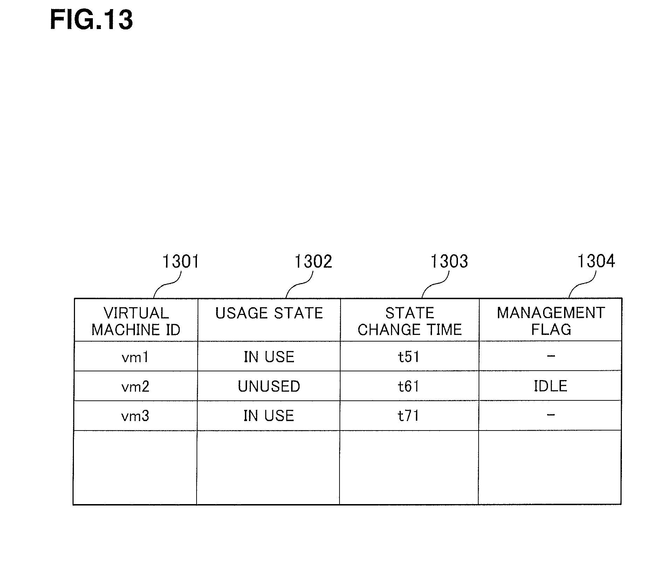

Fig. 13 shows a management table to which reference is made when a virtual machine that has not been used by a user for a certain period of time is presented as an idle virtual machine to the user. This management table is created by the asset management server and registered in the database 207.

When the management server executes the processing for identifying a virtual machine which is active, but not used by the user as described above, it registers the result of identification in Fig. 13. Referring to Fig. 13, reference numeral "1301" represents a virtual machine ID field and reference numeral "1302" is a field indicating the usage of the virtual machine. If the usage of the virtual machine is changed, state change time is recorded in a field 1303. If the state of the virtual machine is changed to "unused," and after a predetermined period of time has elapsed, the asset management server sets a value indicating "idle" to a management flag field 1304.

By referring to the table in Fig. 13, the asset management server can display, to the administrator, the ID of the virtual machine in idle state and the ID of the server having this virtual machine. As a result, the administrator can become aware of the amount of the physical server's resources used related to the virtual machines as well as the idle virtual machine(s) not used by the user.

If the computer system explained in the embodiments described above is used, it is possible to change allocation of the virtual machines to users, have a user return a virtual machine(s) in the idle state, and migrate the virtual machine(s) from a physical server with a low resource usage rate to another physical server with a higher resource usage rate.

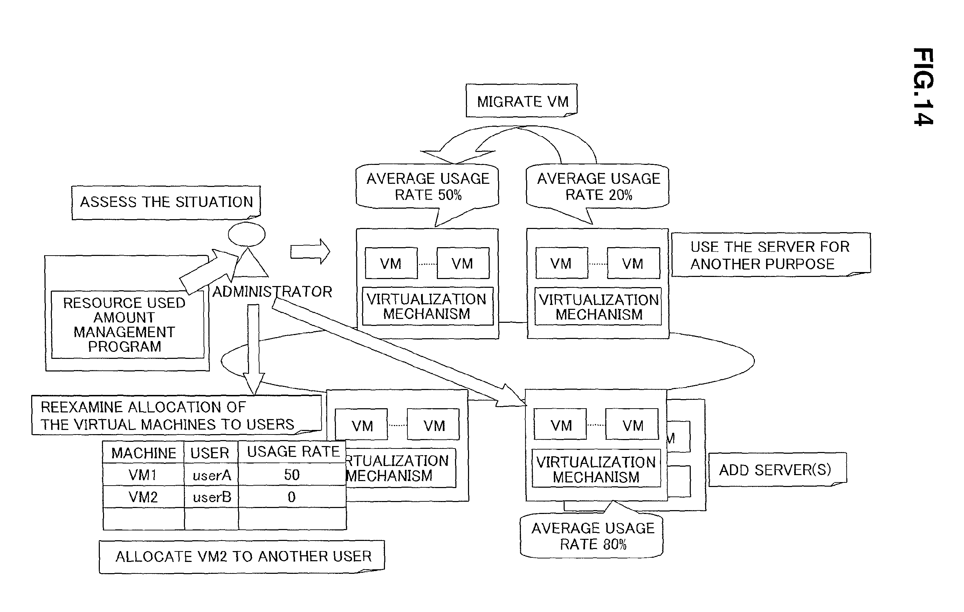

Fig. 14 is a block diagram illustrating the above-described situation. When the administrator allocates the virtual machines to users in a fixed manner after receiving the information about the usage of resources for the physical server, on which virtual machines operate, and the user's usage of each virtual machine, the administrator reexamines allocation to the users, has the users return the virtual machines in the idle state, deletes or initializes virtual machine images, and allocates the virtual machines to other users.

Furthermore, the administrator makes effective use of the assets by migrating the virtual machines from a physical server with a low total resource usage rate to another physical server with a higher resource usage rate, and combining physical servers. Furthermore, if the resource usage rate continues to be higher than a limit value because of the use of resources by the users at peak time and the trend in the amount of resources use, the administrator adds a physical server(s).

The above explanation has been given by referring to the desktop server, the asset management server, and the desktop allocation management server as separate pieces of hardware; however, these servers may be provided on common hardware.

Also, the user information acquisition unit 201 and the virtual machine operation information acquisition unit 202 may be provided in the desktop allocation management server.

The same area in the memory for the desktop server may sometimes be allocated to a plurality of virtual machines. For example, it is the case where (memory) pages in the memory space for virtual machines, in which only a set pattern (such as zero) is written, are put together, thereby reducing the amount of memory used.

The virtualization mechanism allocates different areas in the physical memory to the virtual machines; however, it may allocate a certain area in the physical memory to a plurality of virtual machines. In this case, the value(s) of the "usage rate excluding machines not used by users" and/or the "unused capacity including machines not used by users" displayed on the screen shown in Fig. 7 may be calculated in consideration of sharing of the physical memory among virtual machines. For example, the following methods are possible:
(A) Regarding the virtual machine which was determined to be not used in S504 in Fig. 5, information (particularly, the capacity) about a physical memory area shared among virtual machines is collected from the virtualization mechanism prior to S505, thereby preventing addition of the capacity of the shared physical memory area in the step of addition in S505.
(B) If information to identify the virtual machines which share the common physical memory area is obtained, and if it is confirmed based on this identification information that all the virtual machines sharing the physical memory area are not being used, the capacity of the common physical memory area may be added as the unused capacity.

## Claims

1. A computer system comprising:
a first server computer coupled to a plurality of user computers;
a second server computer that allocates the plurality of user computers to the first server computer; and
a third server computer managing a resource for the first server computer;
wherein the first server computer includes:
a resource for realizing control and/or storage processing;
a virtualization mechanism composed of a virtual machine providing program for forming a plurality of virtual machines that share the resource; and
a processing unit executing, based on information about allocation of the plurality of virtual machines to the plurality of user computers, processing on input information from the user computers allocated to each of the plurality of virtual machines and providing the plurality of user computers with information relating to the processing; and
wherein the third server computer executes:
first processing identifying the virtual machine which is active;
second processing identifying whether the active virtual machine is accessed by the user computer;
third processing identifying, based on the results of the first and second processing, the virtual machine which is active, but is not accessed by the user computer;
fourth processing finding the capacity of the resource used by the virtual machine identified by the third processing, from among a total of the capacity of the resource; and
fifth processing outputting the result of the fourth processing.

2. A computer system according to claim 1,
wherein the third server computer includes a table that records information corresponding to whether the virtual machine is active or not, a user who has logged onto the virtual machine, identification information about the virtual machine, and the capacity of the resource used by the virtual machine,
wherein, in the third processing, the third server computer obtains an ID of the virtual machine which is active and for which the logon user is not set, by referring to the table,
wherein, in the fourth processing, the third server computer obtains the capacity of the resource used by this virtual machine,
wherein the third server computer further executes sixth processing obtaining an amount of the resource used by the first server computer,
wherein the third server computer outputs the capacity of the resource, obtained as a result of the fourth processing, as unused capacity which is the capacity not used by the user computer, together with the virtual machine which is active and for which the logon user ID is not set, to a display device,
wherein the third server computer outputs the capacity, as an amount of the resource actually used, obtained by subtracting the capacity obtained as a result of the fourth processing from the capacity obtained as a result of the sixth processing, to the display device, and
wherein the virtual machine includes an agent program and this agent program notifies the third server computer of the amount of resource used and the logon user ID.

3. A computer system according to claim 1,
wherein the third server computer has a table that records information corresponding to whether the virtual machine is active or not, an ID of the virtual machine, the capacity of the resource used by the virtual machine, and logon time and logoff time when the user computer logged onto and logged off the virtual machine,
wherein, in the third processing, the third server computer obtains the ID of the virtual machine which is active and is logged off by the user computer, by referring to the table,
wherein in the fourth processing, the third server computer obtains the capacity of the resource used by the virtual machine having this ID,
wherein the third server computer further executes a sixth processing obtaining the amount of the resource used by the first server computer,
wherein the third server computer outputs the capacity obtained as a result of the fourth processing, as unused capacity which is the capacity not used by the user computer, together with the ID of the virtual machine which is active and is logged off by the user computer, to a display device, and
wherein the third server computer outputs the capacity, as an amount of the resource actually used, obtained by subtracting the capacity obtained as a result of the fourth processing from the capacity obtained as a result of the sixth processing, to the display device.

4. A computer system according to claim 1, wherein the third server computer judges whether the user computer is accessing the virtual machine or not, based on whether the user computer has logged onto the virtual machine or not.

5. A computer system according to claim 1, wherein the third server computer judges whether the user computer is accessing the virtual machine or not, based on whether a connection is established between the virtual machine and the user computer or not.

6. A computer system according to claim 1, wherein the third server computer judges whether the user computer is accessing the virtual machine or not, based on a number of processes activated by the user computer on the virtual machine.

7. A computer system according to claim 6, wherein if the number of processes is zero, the third server computer determines that the user computer is not accessing the virtual machine.

8. A computer system according to claim 2, wherein the resource is a memory for executing the storage processing.

9. A management server for managing a first server computer that provides a plurality of virtual machines used by a plurality of user computers,
the management server comprising:
an interface for communicating with the first server computer;
an output device for outputting management information about the first server computer;
a first memory for storing resource used amount management information indicating the resource capacity of the first server computer used by the plurality of virtual machines; and
a processing unit,
wherein the processing unit specifies the virtual machines which are active, by accessing the plurality of virtual machines via the interface, and identifies the virtual machine which is active and is not accessed by the user computer, from among the specified active virtual machines, and
wherein the processing unit finds the capacity used by the identified active virtual machine which is not accessed, in the total resource capacity based on the resource used amount management information, and has the display device display the capacity used by the active virtual machine which is not accessed, as management information.

10. A management server according to claim 10,
wherein the resource is a second memory belonging to the first server computer for providing the plurality of virtual machines, and
wherein the processing unit includes the output device display the capacity of the second memory, and the capacity of memory used by the virtual machines and a virtualization providing program belonging to the first server computer for providing the virtual machines.

11. A resource management method for a computer system, wherein the computer system includes a plurality of virtual machines, each of the virtual machines is accessed by a user computer, this user computer is provided with an processing function, and the virtual machines share a resource for realizing the processing function,
the resource management method comprising:
first processing judging whether each of the virtual machines is active or not;
second processing judging whether each of the virtual machines is accessed by the user computer or not;
third processing identifying the virtual machine which is active, but is not accessed by the user computer, based on the results of the first processing and the second processing; and
notifying an administrator of the resource capacity used by the virtual machine identified as a result of the third processing, as a surplus resource amount that can be allocated to the virtual machine accessed by another user computer.
